# EUROPÄISCHE PATENTANMELDUNG

(11) **EP 4 852 303 A1**
(43) Veröffentlichungstag der Anmeldung: **09.12.2026**
(21) Anmeldenummer: 26174286.0
(22) Anmeldetag: 23.04.2026
(51) Int. Cl.: H02P 3/14, E05F 15/60, H02P 7/03, H02P 29/024

(54) **STEUERUNGSVORRICHTUNG FÜR EINEN ELEKTROMECHANISCHEN ANTRIEB ZUM BETÄTIGEN EINES ÖFFNUNGSELEMENTS EINES GEBÄUDES SOWIE VERFAHREN ZUM STEUERN EINES ELEKTROMECHANISCHEN ANTRIEBS UND ELEKTROMECHANISCHER ANTRIEB**

(30) Priorität: 02.06.2025 DE 102025121438
(71) Anmelder: GEZE GmbH, 71229 Leonberg (DE)
(72) Erfinder: Banucu, Remus, 75328 Schömberg (DE); Späth, Markus, 71032 Böblingen (DE); Egorenkov, Sergej, 70437 Stuttgart (DE)
(74) Vertreter: Witte, Weller & Partner Patentanwälte mbB

(57) **Zusammenfassung**

Die Erfindung betrifft eine Steuerungsvorrichtung für einen elektromechanischen Antrieb 10 zum Betätigen eines Öffnungselements 16 eines Gebäudes, die auch bei generatorischen Betriebszuständen eine stabile Energieversorgung der Steuereinheit 32 sicherstellt. Hierzu wird ein steuerbares Schaltelement 38 in die Versorgungsleitung eingefügt, das bei Überschreiten einer kritischen Spannung die Verbindung zur Schalteinrichtung 34 trennt, während die Versorgung der Steuereinheit 32 über eine separate Spannungseinheit aufrechterhalten bleibt. Dadurch kann der Antrieb auch im Generatormodus kontrolliert betrieben und Schäden an empfindlichen Bauteilen vermieden werden.

## Beschreibung

Die Erfindung betrifft eine Steuerungsvorrichtung für einen elektromechanischen Antrieb zum Betätigen eines Öffnungselements, insbesondere eines Gebäudes. Ferner betrifft die Erfindung ein Verfahren zum Steuern eines elektromechanischen Antriebs sowie einen elektromechanischen Antrieb.

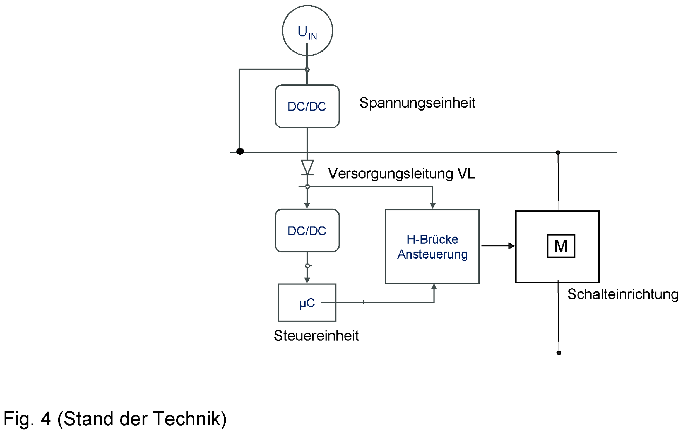

In Figur 4 ist beispielsweise ein Teil einer Steuerungsvorrichtung aus dem Stand der Technik dargestellt. Eine H-Brücke wird von einer Steuereinheit angesteuert, um bspw. durch Pulsweitenmodulation den Motor mit einer bestimmten Geschwindigkeit zu betreiben. Die Spannung für die Steuereinheit liefert eine Spannungseinheit, die ihrerseits mit der Versorgungsspannung U_{IN} verbunden ist.

Bei einem solchen System treten insbesondere bei generatorischen Betriebszuständen - etwa wenn eine Tür durch äußere Einwirkung entgegen der Motorbewegung gedrückt wird oder beim Bremsen schwerer Türen - Probleme auf. Durch die Rückspeisung der kinetischen Energie in Form elektrischer Energie von der Schalteinrichtung steigt die Versorgungsspannung an, was zur Abschaltung der Spannungseinheit führen kann, die bspw. die Steuereinheit versorgt. Dies hat zur Folge, dass sich die Spannungseinheit abschaltet und damit auch die Steuereinheit von der Spannungsversorgung getrennt wird, was ein unvorhersehbares oder unkontrolliertes Verhalten des gesamten Systems nach sich ziehen kann. Um dem entgegenzuwirken, werden im Stand der Technik häufig elektronische Lasten eingesetzt, die die überschüssige Energie in Wärme umwandeln. Solche Maßnahmen erhöhen jedoch die Komplexität und die Kosten der Systeme, verursachen zusätzliche Wärmeentwicklung und reduzieren die Lebensdauer der beteiligten Komponenten.

Der Erfindung liegt daher die Aufgabe zugrunde, eine Steuerungsvorrichtung bereitzustellen, die auf einfache und kosteneffiziente Weise eine stabile Versorgung der Steuereinheit auch in generatorischen Betriebszuständen (Generatormodus) sicherstellt und gleichzeitig die Versorgungseinheit sowie weitere elektronische Bauteile vor Überspannung schützt.

Diese Aufgabe wird von einer Steuerungsvorrichtung gemäß Anspruch 1 gelöst. Zur Lösung dieser Aufgabe wird insbesondere vorgeschlagen, ein erstes Schaltelement in die Versorgungsleitung zwischen der Versorgungsspannung und der Schalteinrichtung einzufügen. Dieses Schaltelement ist derart ausgelegt, dass es die Verbindung zwischen dem Anschluss für die Versorgungsspannung (Versorgungseingang) und der Schalteinrichtung gezielt unterbrechen kann, ohne dabei die Versorgung der Steuereinheit zu beeinflussen. Letztere bleibt über eine separate zweite Versorgungsleitung mit einer Spannungseinheit, beispielsweise einem DC/DC-Wandler, verbunden. Dadurch kann bei erkannter Generatorwirkung der elektrische Motor gezielt vom Versorgungseingang getrennt werden, wodurch ein Anstieg der Versorgungsspannung zuverlässig vermieden wird und die Spannungseinheit vor der zu hohen Spannung geschützt ist. Die Steuereinheit bleibt durchgehend aktiv und kann den Antrieb kontrolliert in einen generatorischen Modus überführen, ohne dass es zu einem Funktionsausfall oder einer ungewollten Systemreaktion kommt. Der Übergang vom Antriebsmodus in den Generatormodus erfolgt dabei so schnell und flüssig, dass er nach außen hin praktisch unbemerkt bleibt. Des Weiteren lässt sich der Motor vor Überhitzung schützen und die Energieeffizienz steigern, wenn z. B. bei zu hoher Generatorwirkung die Energie in einen optionalen elektrischen Energiespeicher rückgespeist wird.

Bei einer Weiterbildung der Erfindung ist das erste Schaltelement ein schnell schaltendes Schaltelement. Durch die Wahl eines schnellen Schaltelements kann besonders rasch auf Spannungsspitzen oder unerwünschte generatorische Zustände reagiert werden. Dies erhöht die Reaktionsgeschwindigkeit der Schutzmaßnahme erheblich und stellt sicher, dass die Schalteinrichtung zuverlässig von der Versorgungseinheit entkoppelt wird, noch bevor eine kritische Spannungsüberschreitung auftritt. Dadurch lassen sich Schäden an empfindlichen Komponenten vermeiden und ein durchgängiger, sicherer Betrieb gewährleisten.

Bei einer weiteren Ausgestaltung der Erfindung ist das Schaltelement ein schnell schaltender P-MOSFET. Ein P-MOSFET weist aufgrund seiner Baustruktur besonders schnelle Schaltzeiten und eine einfache Ansteuerbarkeit auf. Dies erlaubt eine kompakte und kostengünstige Umsetzung der Trennfunktion, ohne dass zusätzliche komplexe Ansteuerschaltungen notwendig sind. Zudem kann durch geeignete Wahl des P-MOSFETs auch eine thermisch und elektrisch belastbare Ausführung realisiert werden, die für die typischen Ströme und Spannungen in Türantrieben gut geeignet ist.

Bei einer bevorzugten Weiterbildung der Erfindung ist das Schaltelement über eine Steuerleitung mit der Steuereinheit verbunden und durch die Steuereinheit steuerbar. Diese Ausgestaltung erlaubt es, die Schaltelemente gezielt und abhängig von den jeweiligen Betriebsbedingungen zu öffnen oder zu schließen. Dadurch wird die Steuerung intelligent und adaptiv und kann auf verschiedene Situationen, insbesondere auch auf dynamische Veränderungen im Motorverhalten, reagieren. Die Integration der Schaltlogik in die bestehende Steuereinheit erlaubt eine besonders wirtschaftliche Umsetzung, da keine separate Steuerelektronik erforderlich ist.

Bei einer weiteren Ausführungsform weist die Schalteinrichtung eine Brückenschaltung mit zumindest zwei Teilbrücken mit jeweils zwei Schaltelementen (Q1 bis Q4) auf, die so angeordnet sind, dass jeweils zwei in Reihe liegende Schaltelemente eine Brücke zwischen einem ersten Anschlusspunkt und einem zweiten Anschlusspunkt bilden, wobei der elektrische Motor an den mittleren Knotenpunkten der Brücken anschließbar ist. Die oberen Schaltelemente (High Side) verbinden dabei die beiden Knotenpunkte mit dem ersten Anschlusspunkt, während die unteren Schaltelemente (Low Side) die Knotenpunkte mit dem zweiten Anschlusspunkt verbinden. Die Steuereinheit ist dabei ausgelegt, die Brückenschaltung in einem Antriebsmodus und einem Generatormodus zu betreiben. Dies ermöglicht einen flexiblen Betrieb des Motors in beide Richtungen sowie eine gezielte Energierückgewinnung oder Energieableitung bei Rückspeisung. Der Generatormodus kann gezielt genutzt werden, um Bremsvorgänge weich zu gestalten oder überschüssige Energie geregelt aus dem System abzuführen, während die Umschaltung zwischen den Modi durch die Steuereinheit in Echtzeit erfolgt. Eine Brückenschaltung mit zwei Teilbrücken ist für DC Motoren einsetzbar. Eine Brückenschaltung mit drei Teilbrücke ist zur Ansteuerung eines BLDC Motors (brushless DC Motor) geeignet und mit vier Teilbrücken zur Ansteuerung eines Schrittmotors.

Bei einer bevorzugten Weiterbildung der Erfindung sind der Schalteinrichtung Messelemente zugeordnet, die ausgelegt sind, Spannungen und/oder Ströme an der Schalteinrichtung und/oder am Motor zu erfassen, und die Steuereinheit ist ausgelegt, die erfassten Messwerte auszuwerten und abhängig davon das Schaltelement zu steuern. Durch diese sensorische Rückmeldung kann die Steuerung jederzeit den aktuellen Betriebszustand des Motors und der Leistungsstufe überwachen. Bestimmte Betriebszustände wie Überlastung oder Generatorbetrieb lassen sich frühzeitig erkennen, und das Schaltelement kann gezielt geöffnet werden, um eine sichere Trennung vorzunehmen. Dies erhöht die Betriebssicherheit und verlängert die Lebensdauer der Komponenten.

Bei einer weiteren Ausführungsform ist die Steuereinheit ausgelegt, bei Überschreiten der Motorspannung über einen vorgegebenen Wert, insbesondere die Versorgungsspannung, das Schaltelement zu öffnen und die Verbindung zwischen Anschluss (Versorgungseingang) und Schalteinrichtung zu unterbrechen. Diese Schwellenwertlogik ermöglicht eine einfache und dennoch wirkungsvolle Schutzfunktion, die ohne aufwändige externe Schutzschaltungen realisierbar ist. Der festgelegte Schwellenwert stellt sicher, dass eine Trennung nur bei tatsächlich kritischen Spannungswerten erfolgt, wodurch der Betrieb unter normalen Bedingungen unbeeinträchtigt bleibt.

Bei einer bevorzugten Weiterbildung ist die Schalteinrichtung ausgelegt, die dem Motor zur Verfügung gestellte Energie einzustellen, insbesondere durch eine Pulsweitenmodulation der angelegten Spannung einzustellen. Die PWM-Steuerung erlaubt eine feindosierte Regelung der Energiezufuhr, was nicht nur für den Antriebsbetrieb von Vorteil ist, sondern auch im Generatormodus zur gezielten Abführung der Rückspeiseenergie genutzt werden kann. Dadurch kann die Systemsteuerung noch effizienter gestaltet werden.

Bei einer weiteren Ausführungsform betrifft die Erfindung ein Verfahren zum Steuern eines elektromechanischen Antriebs zum Betätigen eines Öffnungselements eines Gebäudes, mit den Schritten: Ansteuern einer Schalteinrichtung durch eine Steuereinheit, um einen elektrischen Motor des elektromechanischen Antriebs in einen Antriebsmodus mit Energie zu versorgen, wobei die Schalteinrichtung mit einer Versorgungsspannung verbunden ist, die im Antriebsmodus die Energie für den Motor liefert, Erfassen zumindest einer Spannung und/oder zumindest eines Stroms an der Schalteinrichtung, und Unterbrechen der Verbindung zur Versorgungsspannung durch ein erstes Schaltelement, wenn die erfasste Spannung bzw. Strom, die der Motor in einem Generatormodus erzeugt, über einen ersten Schwellenwert (jeweils für Spannung und Strom)steigt. Dieses Verfahren stellt sicher, dass bei unerwarteten Rückspeiseeffekten die Versorgungseinheit (insbesondere die Spannungseinheit) geschützt wird, während der Antrieb durch eine Weiterversorgung der Steuerungskomponenten dennoch kontrolliert weiterbetrieben werden kann.

Bei einer Weiterbildung dieses Verfahrens ist der Schwellenwert größer als der Wert der Versorgungsspannung. Diese Definition stellt sicher, dass nur bei tatsächlicher Gefährdungslage eine Trennung erfolgt und normale Spannungsschwankungen innerhalb des Toleranzbereichs keine Schutzreaktion auslösen. An dieser Stelle sei jedoch noch darauf hingewiesen, dass bspw. ein Anstieg der Versorgungsspannung nicht nur durch die Generatorwirkung des Motors sondern auch durch ein Netzteil verursacht werden kann, welches die Versorgungsspannung bereitstellt. Diese beiden Fälle können im Betrieb durch Strommessungen unterschieden werden, wobei bspw. nur bei einem Anstieg der Versorgungsspannung durch die Generatorwirkung durch Unterbrechung der Schalteinrichtung reagiert wird.

Bei einer weiteren Ausgestaltung bleibt auch bei einer Unterbrechung der Verbindung zur Versorgungsspannung die Versorgung der Steuereinheit mit Energie aufrechterhalten. Diese Maßnahme gewährleistet die durchgängige Betriebsfähigkeit der Steuerlogik, sodass keine Systemresets oder Ausfälle auftreten, was insbesondere für sicherheitskritische Anwendungen von Bedeutung ist.

In einer weiteren Ausgestaltung erfolgt die Versorgung der Steuereinheit mit Energie über eine Spannungseinheit, die ihrerseits mit der Versorgungsspannung verbunden ist. Diese separate Energieversorgung stellt eine saubere Entkopplung zwischen Leistungs- und Steuerteil sicher, liefert die für die Steuereinheit erforderliche Spannung und erhöht somit die Stabilität und Störfestigkeit des Systems.

Bei einer weiteren Verfahrensvariante wird die Spannung an der Schalteinrichtung durch eine Pulsweitenmodulation gesteuert, wenn das erste Schaltelement geöffnet ist und keine Verbindung zur Versorgungsspannung besteht. Dadurch kann auch im generatorischen Zustand eine gezielte Beeinflussung der Energieabgabe erfolgen, etwa um eine kontrollierte Bremswirkung zu erzielen oder um die Spannung in der Brückenschaltung, bspw. einer H-Brücke, zu stabilisieren.

In einer weiteren Ausgestaltung stellt das erste Schaltelement die Verbindung wieder her, wenn die Spannung an der Schalteinrichtung wieder unter einen definierten zweiten Schwellenwert fällt. Diese Rückschaltlogik (Hysterese) sorgt für eine automatische Wiederherstellung des Normalbetriebs, sobald die Gefährdungslage nicht mehr besteht. Dies erlaubt einen unterbrechungsfreien und autonomen Betrieb ohne externen Eingriff.

Bei einer weiteren Ausführung sind der erste und der zweite Schwellenwert gleich. Dadurch wird eine besonders einfache Implementierung möglich (ohne Hysterese), bei der mit nur einem festen Grenzwert gearbeitet werden kann, was die Parametrierung der Steuerung erleichtert und das System robuster gegenüber Fehlparametrierungen macht.

Bei einer weiteren Ausführung wird anhand der Richtung des Stroms von bzw. zu der Schalteinrichtung die Ursache des Spannungsanstieges bestimmt, und abhängig davon das erste Schaltelement geöffnet wird. Auf diese Weise lassen sich Spannungsanstiege bzw. Spannungsschwankungen bedingt einerseits durch die Generatorwirkung des Motors oder andererseits durch das die Versorgungsspannung liefernde Netzteil unterscheiden.

Schließlich betrifft die Erfindung auch einen elektromechanischen Antrieb zum Betätigen eines Öffnungselements, insbesondere eines Gebäudes, mit einer Steuerungsvorrichtung, wie zuvor beschrieben, und einem elektrischen Motor, der über die Steuerungsvorrichtung in einem Antriebsmodus oder einem Generatormodus betreibbar ist. Diese Kombination stellt ein besonders robustes und anpassungsfähiges Antriebssystem dar, das sowohl einen zuverlässigen Betrieb bei normaler Bewegung als auch einen sicheren Umgang mit rückgespeister Energie ermöglicht, und dabei ohne zusätzliche Schutzbeschaltung auskommt.

Es versteht sich, dass die vorstehend genannten und die nachstehend noch zu erläuternden Merkmale nicht nur der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung. Dabei zeigen:
- Figur 1: eine schematische Darstellung eines elektromechanischen Antriebs für einen Flügel einer Tür;
- Figur 2: ein schematisches Blockschaltbild einer erfindungsgemäßen Steuerungsvorrichtung;
- Figur 3: ein detaillierteres Blockschaltbild der erfindungsgemäßen Steuerungsvorrichtung; und
- Figur 4: ein schematisches Blockschaltbild eines Teils einer Steuerung aus dem Stand der Technik.

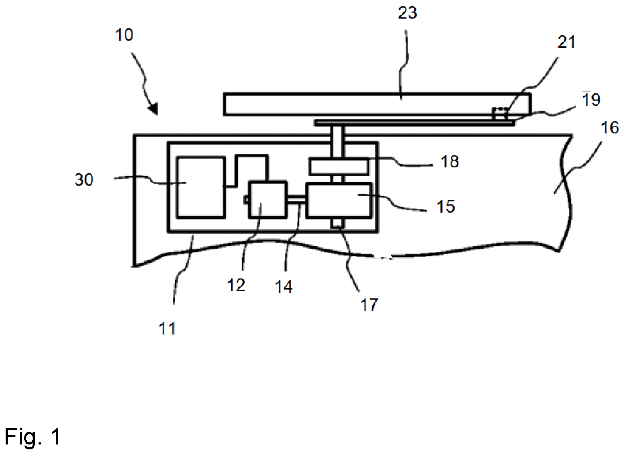

Wie aus Figur 1 ersichtlich ist, weist ein beispielhafter elektromechanischer Antrieb 10 zum Betätigen eines Öffnungselements eines Gebäudes, hier ein beweglicher Flügel 16 einer Tür, ein Gehäuse 11 auf, in welchem eine Steuerungsvorrichtung 30 und ein Elektromotor 12 (nachfolgend kurz Motor genannt) vorgesehen sind, dessen Motorwelle 14 über eine Kraftübertragungseinrichtung mit dem Flügel 16 in Wirkverbindung steht, so dass eine Bewegung der Motorwelle 14 eine Bewegung des Flügels 16 bewirkt. Ferner enthält das Gehäuse 11 einen mechanischen Energiespeicher 18, welcher durch eine Öffnungsbewegung des Flügels 16 aufgeladen und durch eine Schließbewegung des beweglichen Flügels 16 entladen wird, sowie eine Bremsvorrichtung als Teil der Steuerungsvorrichtung 30, durch welche die Bewegung des Flügels 16 gebremst werden kann, indem der Motor 12 als Generator (Generatormodus) betrieben wird. Hierbei entsteht durch die Bewegung des Flügels 16 des als Generator betriebenen Motors 12 eine bewegungsabhängige Ausgangsspannung, die in Wärme umgesetzt wird. Der Geschwindigkeitsverlauf (Geschwindigkeitstrajektorie) des Flügels 16 lässt sich dabei steuern.

Der mechanische Energiespeicher 18 ist vorzugsweise als Feder ausgeführt und wird durch manuelles Öffnen des Flügels 16 mit Energie aufgeladen, die beim Loslassen des Flügels 16 wieder abgegeben wird, um diesen zu schließen.

Wie aus Figur 1 weiter ersichtlich ist, ist bei dem dargestellten Ausführungsbeispiel das Gehäuse 11 flügelfest am oberen linken Randbereich des beweglichen Flügels 16 montiert. Die Motorwelle 14 des Motors 12 ist über ein Getriebe 15 mit einer Abtriebswelle 17 gekoppelt, welche mit einem Gleitarm 19 gekoppelt ist. Der Gleitarm 19 weist an seinem freien Ende einen Gleitstein 21 auf, welcher in einer blendenfest montierten Gleitschiene 23 geführt ist. Der Motor 12 ist vorzugsweise als permanentmagneterregter Gleichstrommotor ausgeführt. Andere Motoren, wie BLDC Motor oder Schrittmotor, sind natürlich auch denkbar und je nach Anwendungsfall sogar dem DC Motor zu bevorzugen. Selbstverständlich sind statt einem Gleitarm auch andere Ausgestaltungen denkbar, bspw. eine Verbindung über ein Gestänge.

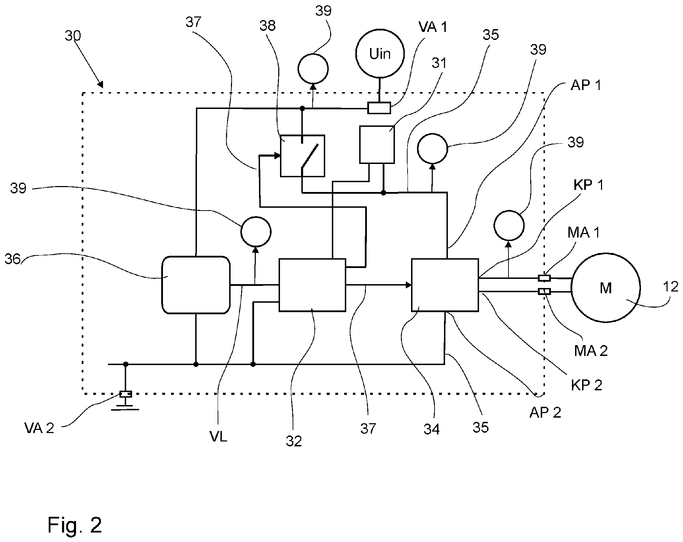

Mit Bezug auf die Figur 2 wird nachfolgend der allgemeine Aufbau der Steuerungsvorrichtung 30 erläutert. Die Steuerungsvorrichtung 30 weist zwei Anschlüsse VA1, VA2 auf, an die eine Spannungsversorgung Uᵢₙ angeschlossen werden kann. Ferner weist die Steuerungsvorrichtung 30 zwei Anschlüsse MA1, MA2 auf, an die der Motor 12 angeschlossen werden kann.

Die Steuerungsvorrichtung 30 weist eine Steuereinheit 32 auf, die verschiedene Steuerungsaufgaben übernimmt und stellvertretend für verschiedene Steuerungskomponenten innerhalb der Steuerungsvorrichtung 30 steht. Die Steuereinheit 32 kann bspw. einen Mikrocontroller aufweisen. Zur gesteuerten Versorgung des Motors 12 mit Energie ist eine Schalteinrichtung 34 vorgesehen, die über Versorgungsleitungen 35 mit den Anschlüssen VA1, VA2 verbunden ist. Über diese Versorgungsleitungen 35 wird die Energie geliefert, die die Schalteinrichtung 34 dem Motor 12 bereitstellt. Die Höhe dieser Energie bzw. Spannung, die an den Anschlüssen MA1, MA2 anliegt, ist dabei einstellbar.

Mit der Versorgungsleitung 35 ist auch ein Energiespeicher 31 verbunden, der beispielsweise eine wiederaufladbare Batterie aufweist. Der Energiespeicher 31 ist dafür ausgelegt, elektrische Energie während einer bestimmten Phase des Betriebs, bspw. im Generatormodus, zu speichern und in einer anderen Phase des Betriebs, beispielsweise in einem Notfallbetrieb, wieder abzugeben, bspw. an die für die Steuerung des Motors erforderlichen Komponenten. So kann bspw. die Energieeffizienz gesteigert werden, wenn bei zu hoher Generatorwirkung die Energie in den elektrischen Energiespeicher rückgespeist wird.

Zur Einstellung der Spannung an den Anschlüssen MA1, MA2 ist die Schalteinrichtung 34 über eine Steuerleitung 37 mit der Steuereinheit 32 verbunden. Die Steuereinheit 32 ist unter anderem dazu ausgelegt, die Schalteinrichtung 34 so zu steuern, dass der Motor mit der gewünschten Geschwindigkeit bzw. über die Zeit mit der gewünschten Geschwindigkeitstrajektorie betrieben wird.

Für die Steuerung durch die Steuereinheit 32 sind verschiedene Messelemente 39 vorgesehen, die Spannungen und/oder Ströme messen und die entsprechenden Messwerte an die Steuereinheit 32 liefern. So wird beispielsweise die Spannung Uᵢₙ am Versorgungsanschluss VA1, die Spannung und der Strom in der Versorgungsleitung 35 (bspw. durch High Side und Low Side Messungen an der Brückenschaltung) gemessen sowie beispielsweise die Spannung und der Strom, der an den Anschlüssen MA1, MA2 anliegt bzw. durch diese fließt. Selbstverständlich sind weitere Messelemente, wie Drehgeber für die Motordrehzahl, etc., denkbar, sofern diese für eine gute Steuerung notwendig sind.

Die Steuereinheit 32 ist nicht mit der Versorgungsspannung direkt verbunden, da diese Spannung zu hoch wäre. Vielmehr ist eine Spannungseinheit 36 vorgesehen, die die Versorgungsspannung auf einen kleineren definierten Wert bringt. Diese Spannung wird über eine weitere Versorgungsleitung VL an die Steuereinheit 32 geführt. An diese Versorgungsleitung VL sind verschiedene Steuerungskomponenten angeschlossen, die insbesondere eine Spannung benötigen, die kleiner ist als die Versorgungsspannung Vᵢₙ. Auch dieser Versorgungsleitung VL ist ein Messelement 39 zugeordnet, das die Spannung und/der den Strom messen und an die Steuereinheit 32 liefern kann.

In der Figur 2 ist noch ein Schaltelement 38 dargestellt, dass in der Versorgungsleitung 35 von der Schalteinrichtung 34 zu dem Versorgungsanschluss VA1 liegt. Dieses Schaltelement 38 kann folglich die Schalteinrichtung 34 von der Versorgungsspannung Uᵢₙ trennen. Die Steuerung dieses Schaltelements 38 erfolgt über die Steuereinheit 32, die über eine Steuerleitung 37 die entsprechenden Steuersignale an das Schaltelement 38 überträgt.

Im normalen Betrieb ist dieses Schaltelement 38 geschlossen, sodass die Schalteinrichtung 34 mit der Versorgungsspannung Uᵢₙ verbunden ist. Die Schalteinrichtung 34 kann dann, beispielsweise über eine Pulsweitenmodulation, die Motorspannung an den Anschlüssen MA1 und MA2 entsprechend einstellen.

Soll der Motor 12 nicht zum Antrieb sondern zum Bremsen als Generator benutzt werden, ermöglicht die Schalteinrichtung 34, die durch den Generatorbetrieb entstehende Spannung in Wärme umzusetzen, beispielsweise in dem ein Kurzschluss zwischen den beiden Anschlüssen MA1, MA 2 hergestellt wird.

Bei bestimmten Anwendungssituationen, beispielsweise bei einem sehr schnellen aufdrücken des Flügels 16, kann eine sehr hohe Generatorspannung entstehen, die über die Versorgungsleitung 35 beispielsweise zu der Spannungseinheit 36 gelangen kann. Eine solche hohe Spannung, die beispielsweise über der Versorgungsspannung liegt, kann dazu führen, dass die Spannungseinheit 36 abschaltet und infolgedessen die Steuerungseinheit 32 nicht mehr mit einer Versorgungsspannung versorgt. In diesem Fall wäre die Steuerungsvorrichtung 30 sozusagen steuerungslos.

Um eine solche Situation zu vermeiden, ist das Schaltelement 38 vorgesehen, das bei Erfassen einer solchen hohen Spannung im Generatorbetrieb des Motors 12 über die Steuerungseinheit 32 geöffnet wird. Damit wird die Versorgungsleitung 35 getrennt, sodass die Generatorspannung nicht mehr zu der Spannungseinheit 36 oder anderen an der Spannungsversorgung angeschlossene Komponenten gelangen kann.

Dank dieser Trennung kann die Spannungseinheit 36 weiter die erforderliche Versorgungsspannung für die Steuerungseinheit 32 liefern, sodass die Schalteinrichtung 34 weiterhin gesteuert werden kann. Insbesondere kann die Bremsung des Motors 12 beispielsweise über eine Pulsweitenmodulation präzise gesteuert werden. Die für die Steuerung des Schaltelements 38 erforderlichen Messwerte liefern die Messelemente 39, die von der Steuerungseinheit 32 entsprechend ausgewertet werden können. Insbesondere erfolgt ein Vergleich der erfassten Spannung in der Versorgungsleitung 35 mit einem vordefinierten bzw. einstellbaren Schwellenwert. Dieser Schwellenwert kann beispielsweise der Versorgungsspannung entsprechen.

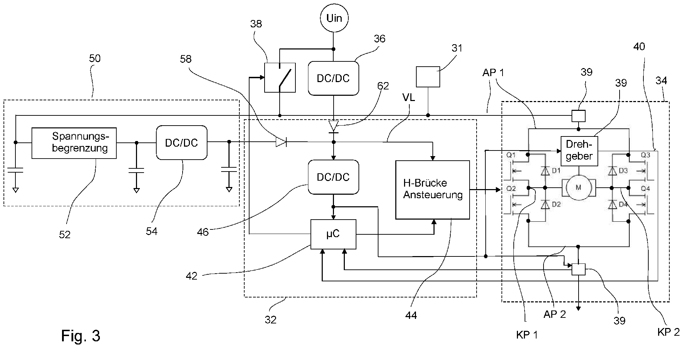

Mit Bezug auf Figur 3, die ein detailliertes Blockdiagramm der Steuerungsvorrichtung 30 zeigt, wird nachfolgend der beispielhafte Aufbau von Steuerungseinheit 32, Schalteinrichtung 34 und Spannungseinheit 36 erläutert.

Die Schalteinrichtung 34 weist beispielsweise eine Brückenschaltung 40 mit zwei Teilbrücken (nachfolgend auch kurz H-Brücke genannt) auf, die den Energiefluss zu bzw. vom Motor 12 steuert. Die H-Brücke 40 zur Steuerung des elektrischen Motors 12 (nachfolgend kurz Motor genannt) besteht aus zwei Teilbrücken. Jede Teilbrücke weist zwei in Serie geschaltete steuerbare Schaltelemente auf, die vorzugsweise als MOSFETs (Metal-Oxide-Semiconductor Field-Effect Transistors) ausgeführt sind. Die erste Teilbrücke umfasst die Schaltelemente Q1 und Q2, während die zweite Teilbrücke die Schaltelemente Q3 und Q4 umfasst. Diese Anordnung ermöglicht es, den elektrischen Motor 12 sowohl im Antriebsmodus als auch im Generatormodus zu betreiben, indem die Schaltelemente gezielt angesteuert werden. An dieser Stelle sei jedoch angemerkt, dass diese H-Brückenschaltung mit zwei Teilbrücken stellvertretend steht für Brückenschaltungen mit zwei und mehr Teilbrücken. Der Aufbau der einzelnen Teilbrücken bei solchen Brückenschaltungen mit mehr als zwei Teilbrücken entspricht dem Aufbau einer Teilbrücke, wie sie nachfolgend erläutert wird.

Die Brückenschaltung 40 besteht aus den vier Schaltelementen Q1, Q2, Q3 und Q4, die zwischen zwei Anschlusspunkten AP1 und AP2 angeordnet sind. Ein erster Anschlusspunkt AP1 dient als Versorgungsspannungspunkt (verbunden über den Versorgungsanschluss VA1 mit der Spannungsversorgung Uᵢₙ), während der zweite Anschlusspunkt AP2 als Massepotential (verbunden mit GND, bzw. dem zweiten Versorgungsanschluss VA2) fungiert. Die vier Schaltelemente sind in zwei symmetrische Teilbrücken unterteilt, wobei die erste Teilbrücke das Schaltelement Q1 aufweist, das den ersten Anschlusspunkt AP1 mit einem ersten Knotenpunkt KP1 verbindet, während das Schaltelement Q2 den ersten Knotenpunkt KP1 mit dem zweiten Anschlusspunkt AP2 verbindet. Die zweite Teilbrücke ist entsprechend aufgebaut, wobei das Schaltelement Q3 den ersten Anschlusspunkt AP1 mit einem zweiten Knotenpunkt KP2 verbindet und das Schaltelement Q4 den zweiten Knotenpunkt KP2 mit dem zweiten Anschlusspunkt AP2 verbindet. Der elektrische Motor 12 ist zwischen den beiden Knotenpunkten KP1 und KP2 bzw. den Motoranschlüssen MA1 und MA2 angeschlossen, sodass durch gezielte Ansteuerung der Schaltelemente eine Steuerung der Motorbewegung erreicht werden kann.

Im Antriebsmodus wird der elektrische Motor aktiv über die Spannungsversorgung Uᵢₙ mit Energie versorgt. Die gewünschte Drehrichtung des Motors kann durch entsprechende Kombinationen der Schaltelemente eingestellt werden. Wenn Q1 und Q4 eingeschaltet sind, während Q2 und Q3 ausgeschaltet sind, fließt der Strom von AP1 über Q1 durch den Motor und über Q4 nach AP2, wodurch sich der Motor in eine Richtung dreht. Werden stattdessen Q3 und Q2 leitend geschaltet, während Q1 und Q4 gesperrt bleiben, fließt der Strom von AP1 über Q3 durch den Motor und über Q2 nach AP2, sodass der Motor in die entgegengesetzte Richtung dreht. Die Drehzahl des Motors kann durch eine pulsweitenmodulierte Ansteuerung der Schaltelemente Q1-Q4 geregelt oder gesteuert werden, indem bspw. eines der leitenden Schaltelemente periodisch ein- und ausgeschaltet wird.

Im Generatormodus arbeitet der Motor als Generator und wandelt mechanische Energie in elektrische Energie um, wodurch der Motor gebremst wird. Dies geschieht, wenn eine äußere Kraft oder die Feder 18 auf den Flügel 16 einwirkt. Je nach Drehrichtung des Motors wird die generierte elektrische Energie zur Bremsung genutzt. Eine Bremswirkung kann durch gezieltes Kurzschließen der Motoranschlüsse erzielt werden, indem entweder Q2 und Q4 oder Q1 und Q3 kurzzeitig leitend geschaltet werden. Durch Pulsweitenmodulation kann die Bremskraft dabei gezielt gesteuert werden.

Zur Absicherung der H-Brücke 40 gegen schädliche Spannungsspitzen sind parallel zu jedem Schaltelement, insbesondere MOSFET, Freilaufdioden D1 bis D4 vorgesehen. Diese Dioden ermöglichen den Abbau induktiver Spannungsspitzen, die durch die Magnetfelder des Motors entstehen. Zudem kann eine Strommessung an den High-Side- und Low-Side-MOSFETs Q1 und Q3 bzw. Q2 und Q4 über die Messelemente 39 erfolgen, um eine Regelung der Bremskraft und des Energieflusses zu ermöglichen.

Durch den Einsatz der Brückenschaltung 40 können sowohl die Drehzahl als auch die Drehrichtung der elektrischen Motors 12 flexibel gesteuert werden. Die Möglichkeit zur Energierückgewinnung erhöht den Wirkungsgrad des Systems erheblich, da die beim Bremsen entstehende Energie nicht in Wärme (bspw. im Motor) umgewandelt, sondern gezielt weiterverwendet wird. Die PWM-Regelung ermöglicht eine effiziente Anpassung der Motordrehzahl bzw. der Bremswirkung des Motors. Durch die Verwendung dieser Brückenschaltung kann somit eine robuste, energieeffiziente und präzise Steuerung der elektromechanischen Antriebs realisiert werden.

Die Steuereinheit 32 weist beispielsweise einen Mikrocontroller 42 und eine Ansteuerung 44 für die Brückenschaltung 40 auf. Die Ansteuerung 44 ist ausgelegt, jeden der Schaltelemente Q1 bis Q4 unabhängig voneinander anzusteuern, d.h. in den leitenden oder sperrenden Zustand zu schalten. Die Ansteuerung 44 wird wiederum vom Mikrocontroller 42 gesteuert. So wird der Antriebsmodus und der Generatormodus, sowie die Pulsweitenmodulation der Brückenschaltung sowohl im Antriebsmodus als auch im Generatormodus durch den Mikrocontroller 42 gesteuert.

Die Spannungsversorgung des Mikrocontrollers 42 erfolgt über die Spannungsversorgung Uᵢₙ, die Spannungseinheit 36 und einen DC/DC Wandler 46, der dem Mikrocontroller eine vordefinierten Spannung bereitstellt. Der DC/DC Wandler 46 ist eingangsseitig hierfür mit einer Versorgungsleitung VL verbunden, die von der Spannungseinheit 36 über eine Diode 62 versorgt ist und an die die Steuerungselemente der Steuerungsvorrichtung 30 angeschlossen sind.

Dem Mikrocontroller 42 werden verschiedene Messwerte zugeführt, um die Steuerung der Brückenschaltung möglichst umfassend und präzise durchführen zu können. So werden bspw. Motorstrom und Motorspannung Im und Vm über die Messelemente 39 gemessen, wie auch die Drehzahl des Motors über einen Drehgeber. Ferner ist über ein Messelemente 39 auch eine Spannungsmessung vorgesehen, die die Spannungen am ersten Anschlusspunkt AP1 misst. Hier ist noch anzumerken, dass die hier genannten Spannungsmessungen immer zwischen dem Messpunkt und GND, d.h. dem zweiten Anschlusspunkt AP2, erfasst werden.

Schließlich umfasst die Steuerungsvorrichtung 30 unter anderem einen Schaltungsblock 50, der einen Spannungsbegrenzer 52, bspw. in Form einer Zener-Diode und einen Aufwärtswandler 54, bspw. ein Boost-Converter aufweist. Der Aufwärtswandler 54 ist dabei eingangsseitig mit dem Spannungsbegrenzer 52 verbunden. Ausgangsseitig ist der Aufwärtswandler 54 mit der Versorgungsleitung VL der Steuerelemente über eine Diode 58 verbunden.

Der Schaltungsblock 50 ist mit dem ersten Anschlusspunkt AP1 elektrisch verbunden und wirkt im Generatormodus oder bei einem Stromausfall. Ein Funktion des Schaltungsblocks 50 im Generatorbetrieb und bei Stromausfall bzw. Stromunterbrechung (Versorgungsspannung UIN = 0V) besteht darin, dass über den Schaltungsblock 50 auch bei einer sehr kleinen Generatorspannung am ersten Anschlusspunkt AP1 (< 1V, d.h. die Drehzahl des Motors ist sehr niedrig bzw. der Flügel 16 bewegt sich sehr langsam) der Mikrocontroller 42 und die Ansteuerung 44 über die Versorgungsleitung VL mit Energie versorgt werden, so dass auch in einem solchen Fall aktiv nach einer definierten oder gewünschten Geschwindigkeitstrajektorie des Flügels 16 geregelt werden kann.

Die zuvor beschriebene Steuerungsvorrichtung zeichnet sich insbesondere dadurch aus, dass die Steuereinheit 32 das Schaltelement 38 so ansteuert, dass der Motor 12 auch in einem Generatormodus, bei dem der Motor eine über einem Schwellenwert liegende Spannung erzeugt, betrieben werden kann, ohne ein Abschalten der Spannungseinheit 36 zu riskieren.

Im Antriebsmodus wird der elektrische Motor 12 durch die Schalteinrichtung 34 mit Energie versorgt, sodass der Flügel 16 eine definierte Bewegung ausführen kann. Die Steuereinheit 32 regelt die Ansteuerung der Schalteinrichtung 34 so, dass der Motor über eine Pulsweitenmodulation eine definierte Geschwindigkeitstrajektorie umsetzt. Die Energie für den Betrieb des Motors wird durch die externe Versorgungsspannung Uᵢₙ, die bspw. von einem Netzteil kommt, bereitgestellt, wobei das Schaltelement 38 geschlossen, d.h. leitend ist.

Im Generatormodus wird der Motor 12 als Generator betrieben, um die Bewegungsenergie des Flügels 16 in elektrische Energie umzuwandeln. Dies geschieht insbesondere dann, wenn der Flügel durch äußere Krafteinwirkung bewegt wird, beispielsweise durch das mechanische Speicherelement 18 oder durch manuelle Betätigung des Flügels 16. Die durch die Generatorfunktion des Motors erzeugte elektrische Energie wird über die Schalteinrichtung so gesteuert, dass sie zur gezielten Bremsung des Motors genutzt wird. Im Falle einer zu großen Krafteinwirkung und damit einer zu hohen erzeugten Spannung wird der Mikrocontroller 42 das Schaltelement 38 in den nicht-leitenden Zustand schalten, so dass die am ersten Anschlusspunkt AP1 liegende Spannung vom Eingang der Spannungseinheit 36 ferngehalten wird.

Zur präzisen Steuerung der Motorbewegung sind die Schaltelemente Q1-Q4 der H-Brücke 40 so angesteuert, dass sie sowohl im Antriebsmodus als auch im Generatormodus optimale Steuerungsmöglichkeiten bieten. Im Antriebsmodus wird einer der beiden Knotenpunkte mit dem ersten Anschlusspunkt AP1 und der andere Knotenpunkt mit dem zweiten Anschlusspunkt AP2 verbunden, sodass eine Versorgungsspannung zwischen dem ersten und dem zweiten Anschlusspunkt anliegt. Dies ermöglicht eine gezielte Steuerung der Drehrichtung des Motors.

Zusätzlich kann die Steuereinheit 32 die Schaltelemente Q1-Q4 so ansteuern, dass zwischen den Knotenpunkten eine durch Pulsweitenmodulation steuerbare Spannung anliegt, wodurch die Drehzahl des elektrischen Motors präzise eingestellt werden kann.

Im Generatormodus erfolgt die Ansteuerung der Schaltelemente abhängig von der Drehrichtung des Motors. Einer der beiden Knotenpunkte wird mit dem ersten Anschlusspunkt AP1 und der andere mit dem zweiten Anschlusspunkt AP2 verbunden, sodass die durch den Motor generierte elektrische Energie gezielt genutzt werden kann. Alternativ können die Schaltelemente auch so angesteuert werden, dass beide Knotenpunkte mit dem ersten AP1 oder dem zweiten Anschlusspunkt AP2 verbunden werden, wodurch eine gezielte Regelung der Bremskraft erreicht wird. Die Bremswirkung kann dabei durch Pulsweitenmodulation der Schaltelemente Q1-Q4 präzise eingestellt werden.

Ein wesentliches Merkmal der Erfindung besteht darin, dass das Schaltelement 38 eine zu hohe Generatorspannung von der Spannungseinheit 36 fernhalten kann, wodurch eine sichere und durchgängige Steuerung des Systems gewährleistet wird.

Zur optimalen Steuerung des Generatormodus können verschiedene Messsignale genutzt werden, darunter Drehgeber-Position, Spannung des Speicherelements, Motorspannung, Strommessung an der High-Side- und Low-Side-Seite der Brückenschaltung 40 sowie der Motorstrom. Diese Parameter werden von der Steuereinheit, insbesondere dem Mikrocontroller 42, erfasst und ausgewertet, um einen optimalen Betrieb auch im Generatormodus zu gewährleisten.

Im Falle eines Ausfalls der externen Energieversorgung Uᵢₙ wird die verfügbare Generatorenergie für die Dämpfung genutzt. Dadurch kann die Bewegung des Flügels 16 auch bei einem Stromausfall kontrolliert werden. Um eine unkontrollierte Bremsung zu verhindern, wird sichergestellt, dass die Geschwindigkeitstrajektorie des Flügels in Abhängigkeit von der Generatorspannung durch die Steuereinheit 32 geregelt werden kann.

Darüber hinaus umfasst die Steuerungsvorrichtung 32 den Schaltungsblock 50 mit dem Spannungsbegrenzer 52 und dem Aufwärtswandler 54, sodass die Steuereinheit 32 auch bei sehr niedriger Generatorspannung zuverlässig betrieben werden kann. Im Falle einer zu hohen Generatorspannung wird die Verbindung zwischen Anschlusspunkt AP1 und dem Eingang der Spannungseinheit 36 unterbrochen, so dass keine Beschädigung bzw. Abschalten der Spannungseinheit 36 auftreten kann.

Die erfindungsgemäße Steuerungsvorrichtung bietet somit eine besonders zuverlässige und kosteneffiziente Lösung für den sicheren Betrieb von Tür- oder Torantrieben, insbesondere bei unerwarteten Rückspeisesituationen. Die intelligente Entkopplung schützt empfindliche Steuerungskomponenten und ermöglicht gleichzeitig eine durchgängige Regelung auch bei Ausfall der externen Spannungsversorgung.

### Bezugszeichenliste:

- 10: elektromechanischer Antrieb
- 11: Gehäuse
- 12: Motor
- 14: Motorwelle
- 15: Getriebe
- 16: Flügel
- 17: Abtriebswelle
- 18: mechanischer Energiespeicher
- 19: Gleitarm
- 21: Gleitstein
- 23: Gleitschiene
- 30: Steuerungsvorrichtung
- 31: Energiespeicher
- 32: Steuereinheit
- 34: Schalteinrichtung
- 35: Versorgungsleitung
- 36: Spannungseinheit
- 37: Steuerleitung
- 38: Schaltelement
- 39: Messelement(e)
- 40: H-Brücke
- 42: Mikrocontroller
- 44: Ansteuerung
- 46: DC/DC-Wandler
- 50: Schaltungsblock
- 52: Spannungsbegrenzer
- 54: Aufwärtswandler
- 58: Diode
- 62: Diode
- AP1: erster Anschlusspunkt
- AP2: zweiter Anschlusspunkt
- VA1: erster Versorgungsanschluss
- VA2: zweiter Versorgungsanschluss
- VL: Versorgungsleitung (zur Steuereinheit)
- KP1: erster Knotenpunkt
- KP2: zweiter Knotenpunkt
- MA1: erster Motoranschluss
- MA2: zweiter Motoranschluss
- Q1-Q4: Schaltelemente der H-Brücke
- D1-D4: Freilaufdioden

## Patentansprüche

1. Steuerungsvorrichtung für einen elektromechanischen Antrieb zum Betätigen eines Öffnungselements, insbesondere eines Gebäudes, mit
einem Anschluss (VA1, VA2), an den eine Versorgungsspannung anlegbar ist;
einer Schalteinrichtung (34), die über eine erste Versorgungsleitung (35) mit dem Anschluss verbunden ist und ausgelegt ist, einen elektrischen Motor (12) des elektromechanischen Antriebs (10) in einem Antriebsmodus über die Versorgungsspannung mit Energie zu versorgen,
einer Steuereinheit (32) zur Steuerung der Schalteinrichtung (34);
einer Spannungseinheit (36), die eingangsseitig mit dem Anschluss über eine zweite Versorgungsleitung verbunden ist und ausgangsseitig mit der Steuereinheit (32) verbunden ist, um diese mit Energie zu versorgen;
**gekennzeichnet durch**
ein erstes Schaltelement (38) in der ersten Versorgungsleitung (35), das ausgelegt ist, die Verbindung zwischen Anschluss (VA1) und Schalteinrichtung (34) gesteuert zu unterbrechen.

2. Steuerungsvorrichtung nach Anspruch 1, **dadurch gekennzeichnet, dass** das erste Schaltelement (38) ein schnell schaltendes Schaltelement ist.

3. Steuerungsvorrichtung nach Anspruch 2, **dadurch gekennzeichnet, dass** das Schaltelement (38) ein schnell schaltender P-MOSFET ist.

4. Steuerungsvorrichtung nach einem der vorhergehenden Ansprüche, **dadurch gekennzeichnet, dass** das Schaltelement (389 über eine Steuerleitung (37) mit der Steuereinheit (32) verbunden ist und durch die Steuereinheit steuerbar ist.

5. Steuerungsvorrichtung nach einem der vorhergehenden Ansprüche, **dadurch gekennzeichnet, dass** die Schalteinrichtung (34) eine Brückenschaltung (40) mit zumindest zwei Teilbrücken, die jeweils zwei Schaltelementen (Q1, Q2, Q3, Q4) aufweisen, wobei die Steuereinheit ausgelegt ist, die Brückenschaltung in einem Antriebsmodus und einem Generatormodus zu betreiben.

6. Steuerungsvorrichtung nach einem der vorhergehenden Ansprüche, **dadurch gekennzeichnet, dass** der Schalteinrichtung (34) Messelemente (39) zugeordnet sind, die ausgelegt sind, jeweils eine Spannung und/oder einen Strom an der Schalteinrichtung und/oder am Motor zu erfassen, und die Steuereinheit ausgelegt ist, die erfassten Messwerte auszuwerten und abhängig davon das Schaltelement zu steuern.

7. Steuerungsvorrichtung nach einem der vorhergehenden Ansprüche, **dadurch gekennzeichnet, dass** die Steuereinheit (32) ausgelegt ist, bei Überschreiten der Motorspannung über einen vorgegebenen Wert, insbesondere die Versorgungsspannung, das Schaltelement (38) zu öffnen und die Verbindung zwischen Anschluss und Schalteinrichtung zu unterbrechen.

8. Steuerungsvorrichtung nach einem der vorhergehenden Ansprüche, **dadurch gekennzeichnet, dass** die Schalteinrichtung (34) ausgelegt ist, die dem Motor zur Verfügung gestellte Energie einzustellen, insbesondere durch eine Pulsweitenmodulation der angelegten Spannung einzustellen.

9. Verfahren zum Steuern eines elektromechanischen Antriebs zum Betätigen eines Öffnungselements eines Gebäudes, mit
Ansteuern einer Schalteinrichtung durch eine Steuereinheit, um einen elektrischen Motor des elektromechanischen Antriebs in einen Antriebsmodus mit Energie zu versorgen, wobei die Schalteinrichtung mit einer Versorgungsspannung verbunden ist, die im Antriebsmodus die Energie für den Motor liefert;
Erfassen einer Spannung und/oder eines Stroms an der Schalteinrichtung, und
Unterbrechen der Verbindung zur Versorgungsspannung durch ein erstes Schaltelement, wenn die erfasste Spannung und/oder der erfasste Strom, die bzw. den der Motor in einem Generatormodus erzeugt, über einen ersten Schwellenwert steigt.

10. Verfahren nach Anspruch 9, wobei der Schwellenwert größer ist als der Wert der Versorgungsspannung.

11. Verfahren nach Anspruch 9 oder 10, wobei auch bei einer Unterbrechung der Verbindung zur Versorgungsspannung die Versorgung der Steuereinheit mit Energie aufrecht erhalten bleibt.

12. Verfahren nach einem der Ansprüche 9 bis 11, wobei die Versorgung der Steuereinheit mit Energie über eine Spannungseinheit erfolgt, die ihrerseits mit der Versorgungsspannung verbunden ist.

13. Verfahren nach einem der Ansprüche 9 bis 12, wobei die Spannung an der Schalteinrichtung durch eine Pulsweitenmodulation gesteuert wird, wenn das erste Schaltelement geöffnet ist und keine Verbindung zur Versorgungsspannung besteht.

14. Verfahren nach einem der Ansprüche 9 bis 13, mit zumindest einem der folgenden Merkmale:
a) wobei das erste Schaltelement die Verbindung wieder herstellt, wenn die Spannung an der Schalteinrichtung wieder unter einen definierten zweiten Schwellenwert fällt, wobei vorzugsweise der erste und der zweite Schwellenwert gleich sind; und/oder
b) wobei anhand der Richtung des Stroms von bzw. zu der Schalteinrichtung die Ursache des Spannungsanstieges bestimmt wird, und abhängig davon das erste Schaltelement geöffnet wird; und/oder
c) wobei im Generatormodus elektrische Energie vom Motor in einem Energiespeicher gespeichert wird.

15. Elektromechanischer Antrieb zum Betätigen eines Öffnungselements eines Gebäudes, mit einer Steuerungsvorrichtung (30) nach einem der Ansprüche 1 bis 8, und einem elektrischen Motor (12), der über die Steuerungsvorrichtung in einem Antriebsmodus oder einem Generatormodus betreibbar ist.
